(19) Europäisches Patentamt
European Patent Office
Office européen des brevets

(11) Veröffentlichungsnummer: **0 029 161**
**B1**

(12) # EUROPÄISCHE PATENTSCHRIFT

(45) Veröffentlichungstag der Patentschrift: **02.01.86**

(51) Int. Cl.⁴: **C 07 C143/70**, C 08 G 18/77// C07C143/80

(21) Anmeldenummer: **80106769.5**

(22) Anmeldetag: **04.11.80**

(54) **Substituierte Polyisocyanate oder Polyisocyanatgemische der Diphenylmethanreihe, die Chlorsulfonylgruppen enthalten, ein Verfahren zu ihrer Herstellung, sowie ihre Verwendung bei der Herstellung von Polyisocyanat-Polyadditions-Verbindungen.**

(30) Priorität: **14.11.79 DE 2945867**

(43) Veröffentlichungstag der Anmeldung: **27.05.81 Patentblatt 81/21**

(45) Bekanntmachung des Hinweises auf die Patenterteilung: **02.01.86 Patentblatt 86/01**

(84) Benannte Vertragsstaaten: **BE CH DE FR GB IT LI NL**

(56) Entgegenhaltungen:
**DE-A- 1 793 407**
**DE-A- 2 650 172**
**Die Akte enthält technische Angaben, die nach dem Eingang der Anmeldung eingereicht wurden und die nicht in dieser Patentschrift enthalten sind.**

(73) Patentinhaber: **BAYER AG**
**Konzernverwaltung RP Patentabteilung**
**D-5090 Leverkusen 1 Bayerwerk (DE)**

(72) Erfinder: **Reiff, Helmut, Dr.**
**Walter-Flex-Strasse 16**
**D-5090 Leverkusen 1 (DE)**
Erfinder: **Dieterich, Dieter, Dr.**
**Ludwig Girtler Strasse 1**
**D-5090 Leverkusen 1 (DE)**

**EP 0 029 161 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Isocyanatoarylsulfochloride sind bekannt. Sie werden gemäß der Deutschen Patentschrift 947 159 durch Phosgenierung von aromatischen Aminosulfonsäuren hergestellt. Nachteilig an diesem Verfahren ist die Notwendigkeit, hochsiedende Lösungsmittel wie Dichlorbenzol und insbesondere Nitrobenzol einzusetzen und die Schwerlöslichkeit der als Ausgangsmaterial verwendeten Aminosulfonsäuren in diesen Lösungsmitteln, selbst bei den hohen angewandten Reaktionstemperaturen. Infolgedessen ist die Umsetzung langwierig und die Ausbeute der erhaltenen Isocyanatoarylsulfochloride läßt zu wünschen übrig. Dies gilt insbesondere für die Herstellung von Diisocyanatoarylsulfochloriden, von denen ein Vertreter im Beispiel 3 der o. g. Patentschrift in einer Ausbeute von 46 % der Theorie erhalten wurde. Bedingt durch die o. g. Nachteile hat das Verfahren keine technische Bedeutung erlangt.

Es ist weiterhin bekannt, einfache Arylsulfochloride durch Sulfonierung von Aromaten, z. B. mit Chlorsulfonsäure oder Gemischen aus Chlorsulfonsäure und Sulfurylchlorid herzustellen (vgl. z. B. Houben-Weyl, 4. Auflage, Band 9, Seite 563-585). Weiterhin ist es bekannt, Sulfochloride aus freien Sulfonsäuren oder deren Salzen mit Säurechloriden herzustellen. Diese aus der Literatur bekannten Verfahren sind bisher nicht oder nur mit negativem Ergebnis für die Herstellung von Isocyanatosulfochloriden aus Isocyanaten angewandt worden. Hierfür sind eine Reihe von Gründen verantwortlich :

Einmal erfordert die Sulfochlorierung mit Chlorsulfonsäure einen Überschuß dieses Reagens und daher eine Aufarbeitung in Gegenwart von Wasser, wodurch die Isocyanatgruppen zersetzt werden, zum anderen sind Isocyanatosulfonsäuren erst in jüngster Zeit bekannt geworden und haben sich als äußerst schwierig handhabbare und extrem reaktionsfähige Verbindungen erwiesen. Darüber hinaus ist bekannt, daß Sulfonsäuregruppen mit Isocyanaten bei erhöhter Temperatur in unübersichtlicher Weise unter $CO_2$-Abspaltung reagieren, so daß unter den üblichen Bedingungen der Sulfochlorid-Herstellung in erheblichem Umfang mit anderen Reaktionen gerechnet werden mußte, z. B. auch mit Sulfon- und Anhydrid-Bildung sowie Polymerisationsreaktionen der Isocyanatgruppe. Die DE-A-2 650 172 beschreibt zwar lagerstabile, in Form einer Lösung oder einer Lösungs-Suspension vorliegende Gemische aromatischer Isocyanatosulfonsäuren mit bestimmten flüssigen Estern anorganischer oder organischer Säuren des Phosphors sowie gegebenenfalls nicht-sulfonierten organischen Polyisocyanaten, jedoch sind diese Gemische mit dem Nachteil behaftet, daß sie ganz erhebliche Mengen der genannten, bei der Umsetzung der Polyisocyanate zu Polyurethanen oft störenden Ester enthalten.

Mindestens 2 Isocyanatgruppen aufweisende Isocyanatoarylsulfochloride, insbesondere die entsprechenden Derivate der technisch wichtigen Diphenylmethanreihe wären jedoch interessante Substanzen mit einem beträchtlichen Anwendungspotential, da sie

1. einen im Vergleich zum unmodifizierten Diisocyanat noch niedrigeren Dampfdruck aufweisen sollten,
2. eine im Vergleich zum unmodifizierten Diisocyanat erhöhte Polarität besitzen und
3. ihre Hydrolyseprodukte (aromatische Diaminosulfonsäuren) vermutlich untoxisch sind.

Es war daher die Aufgabe der vorliegenden Erfindung, chlorsulfonylgruppenhaltige Polyisocyanate oder polyisocyanatgemische der Diphenylmethanreihe und ein technisch durchführbares Verfahren zu ihrer Herstellung zur Verfügung zu stellen. Überraschenderweise konnte diese Aufgabe trotz der genannten, zu erwartenden Schwierigkeiten, mit dem nachstehend beschriebenen erfindungsgemäßen Verfahren gelöst werden. Die nachstehend näher beschriebenen erfindungsgemäßen Verbindungen erwiesen sich im übrigen als wertvolle Ausgangsmaterialien zur Herstellung von Polyisocyanat-Polyadditionsprodukten, die nicht nur die o. g. Vorteile in sich vereinigen sondern auch den mit ihnen hergestellten Polyadditionsprodukten eine verbesserte Flammwidrigkeit verleihen.

Gegenstand der vorliegenden Erfindung sind somit Chlorsulfonylgruppen enthaltende Diisocyanate gemäß der Formel

$$(OCN)_2R(SO_2Cl)_n$$

in welcher

R für einen Kohlenwasserstoffrest steht, wie er durch Entfernung von 2 Isocyanatgruppen und n-Wasserstoffatomen aus einem Diisocyanato-di-phenylmethan oder einem Diisocyanato-diphenyl-methan-Isomerengemisch erhalten wird und

n für 1 oder 2 steht.

Gegenstand der Erfindung ist auch ein Verfahren zur Herstellung von substituierten Polyisocyanaten oder Polyisocyanatgemischen der Diphenylmethanreihe, dadurch gekennzeichnet, daß man mindestens 2 Isocyanatgruppen enthaltende Polyisocyanate oder Polyisocyanatgemische der Diphenylmethanreihe in beliebiger Reihenfolge nacheinander oder gleichzeitig bei 0-160 °C mit

a) 0,2 bis 2,2 Mol, pro 250 g an eingesetztem Polyisocyanat, Schwefeltrioxid oder Chlorsulfonsäure und

b) 0,3 bis 22 Mol, pro 250 g an eingesetztem Polyisocyanat, eines anorganischen Säurechlorids behandelt und Chlorwasserstoff aus dem Reaktionsgemisch entfernt.

Gegenstand der Erfindung ist schließlich auch die Verwendung der nach diesem Verfahren

erhaltenen Polyisocyanate oder Polyisocyanatgemische als Aufbaukomponente bei der Herstellung von Polyisocyanat-Polyadditionsverbindungen.

Zu den besonders bevorzugten erfindungsgemäßen substituierten Polyisocyanaten gehören 4,4'-Diisocyanato-3-chlorsulfonyl-diphenylmethan und 4,4'-Diisocyanato-3,3'-bis-(chlorsulfonyl)-diphenylmethan.

Ausgangsmaterialien für das erfindungsgemäße Verfahren sind :

1. 2,2'-Diisocyanato-diphenylmethan, 2,4'-Diisocyanato-diphenylmethan, 4,4'-Diisocyanato-diphenylmethan, beliebige Gemische dieser Isomeren, sowie beliebige Polyisocyanatgemische der Diphenylmethanreihe, wie sie in an sich bekannter Weise durch Anilin/Formaldehyd-Kondensation und anschließende Phosgenierung des Kondensationsproduktes erhalten werden. Derartige, erfindungsgemäß als Ausgangsmaterial geeignete Polyisocyanatgemische enthalten im allgemeinen 30 bis 95 Gew.-%, vorzugsweise 40 bis 85 Gew.-% der genannten Diisocyanato-diphenylmethan-Isomeren neben höherfunktionellen Polyisocyanaten der Diphenylmethanreihe, d. h. Tri-, Tetra- und/oder höherfunktionellen Polyisocyanaten, in welchen 3, 4 und/oder mehr als 4 über Methylenbrücken verknüpfte, jeweils durch eine Isocyanatgruppe substituierte aromatische Ringe vorliegen.

Erfindungsgemäß als Ausgangsmaterial geeignet sind außerdem solche Diisocyanato-diphenylmethan-Isomeren bzw. Polyisocyanatgemische der Diphenylmethanreihe der beispielhaft genannten Art, welche im Gemisch mit untergeordneten Mengen an (i) durch partielle Carbodiimidisierung der Isocyanatgruppen dieser Polyisocyanate erhaltenen, Carbodiimidgruppen aufweisenden Polyisocyanaten, (ii) durch partielle Urethanisierung der Isocyanatgruppen dieser Polyisocyanate beispielsweise mit Polypropylenglykolen des Molekulargewichtsbereichs 134 bis 700 erhaltenen, Urethangruppen aufweisenden Polyisocyanaten, (iii) durch partielle Allophanatisierung der Isocyanatgruppen dieser Polyisocyanate erhaltenen Allophanatgruppen aufweisenden Polyisocyanaten, (iv) durch partielle Biuretisierung der Isocyanatgruppen dieser Polyisocyanate erhaltenen Biuretpolyisocyanate und/oder (v) durch partielle Trimerisierung der Isocyanatgruppen dieser Polyisocyanate erhaltenen Isocyanatgruppen aufweisenden Polyisocyanaten vorliegen. Bei diesen, erfindungsgemäß ebenfalls als Ausgangsmaterial geeigneten, jedoch weniger bevorzugten Gemischen handelt es sich um nach an sich bekannten Verfahren des Standes der Technik modifizierte Polyisocyanatgemische, in welchen jedoch stets die zuerst genannten Diisocyanatodiphenylmethan-Isomeren bzw. Polyisocyanatgemische der Diphenylmethanreihe in unmodifizierten Form den Hauptanteil darstellen. Die Begriffe « Polyisocyanate der Diphenylmethanreihe » bzw. « Polyisocyanatgemische der Diphenylmethanreihe » umfassen im Rahmen der vorliegenden Erfindung somit sowohl die letztgenannten modifizierten Gemische als auch die Phosgenierungsprodukte von Anilin/Formaldehyd-Kondensation als auch die genannten Diisocyanate.

2. Schwefeltrioxid und/oder Chlorsulfonsäure, wobei das Schwefeltrioxid in flüssiger, gelöster oder in gasförmiger, z. B. durch Stickstoff verdünnter Form oder in Form einer Additionsverbindung an organische Verbindungen eingesetzt werden kann. Derartige Additionsverbindungen sind beispielsweise die Addukte von Schwefeltrioxid an Dioxan, Tetrahydrofuran, Diethylether oder Dimethylformamid. Bevorzugt wird gasförmiges Schwefeltrioxid eingesetzt. Gegebenenfalls mitverwendete Lösungsmittel für das Schwefeltrioxid müssen unter den Reaktionsbedingungen des erfindungsgemäßen Verfahrens gegenüber Schwefeltrioxid und auch gegenüber Isocyanatgruppen inert sein. Geeignet sind beispielsweise halogenierte oder nitrierte Kohlenwasserstoffe wie z. B. Dichlorethan, Tetrachlorethan, Methylenchlorid, Chloroform, Fluortrichlormethan, Nitromethan, Nitrobenzol, Diethylether, Dioxan, Tetrahydrofuran, Schwefeldioxid, Chlorbenzol, Dichlorbenzol, oder bevorzugt überschüssige Mengen der nachstehend unter drittens genannten Säurechloride.

3. Anorganische, zur Überführung von organischen Sulfonsäuregruppen in Sulfochloridgruppen geeignete Säurechloride wie z. B. Thionylchlorid, Sulfurylchlorid, Phosphorpentachlorid, Dischwefeldichlorid oder Phosgen. Bei der Druchführung des erfindungsgemäßen Verfahrens im Laboratoriumsmaßstab wird Thionylchlorid, im technischen Maßstab Phosgen, bevorzugt.

Die unter 3. genannten Säurechloride stellen, falls sie im Überschuß zur Anwendung gelangen, gleichzeitig die bevorzugten Lösungsmittel bei der Durchführung des erfindungsgemäßen Verfahrens dar. Bei Verwendung von Phosgen wird vorzugsweise zusätzlich eines der o.g. inerten Lösungsmittel mitverwendet.

Das erfindungsgemäße Verfahren wird bevorzugt in Gegenwart von acylierten Aminen durchgeführt, z. B. Dimethylformamid, Diethylformamid, Dimethylacetamid, Formylpiperidin, Acetylpiperidin, N-Methylpyrrolidon. Bevorzugter Katalysator ist Dimethylformamid. Auch Pyridin und durch Alkylgruppen substituierte Pyridine sind als Katalysatoren geeignet.

Das Sulfonierungsmittel 2) wird im allgemeinen in einer Menge von 0,2 Mol bis 2,2 Mol pro 250 g (Molekulargewicht von Diisocyanatodiphenylmethan : 250) Polyisocyanat 1) eingesetzt. Bei der Herstellung definierter Diisocyanatomonosulfonsäurechloride werden in der Regel 1 bis 1,2 Mol des Sulfonierungsmittels pro 250 g Polyisocyanat 1) verwendet. Wird der Eintritt von 2 Suflochlorid-Gruppen in 1 Molekül Diisocyanat angestrebt, so werden im allgemeinen 1,8 bis 2,2 Mol Sulfonierungsmittel pro 250 g Polyisocyanat 1) eingesetzt. Grundsätzlich muß darauf geachtet werden, daß das verwendete

Sulfonierungsmittel bei der Reaktion mit dem Polyisocyanat quantitativ verbraucht bzw. ein evtl. verwendeter Überschuß entfernt wird, so daß nach beendeter Sulfonierungsreaktion kein Überschuß Sulfonierungsmittel mehr vorhanden ist. Andererseits ist es durchaus möglich, eine nur teilweise Sulfochlorierung des Diisocyanats zu bewirken, indem weniger als die äquivalente Menge des genannten Sulfonierungsmittels eingesetzt wird.

So können beispielsweise auch nur 0,2 bis 0,9 Mol Sulfonierungsmittel pro 250 g Polyisocyanat 1) angewendet werden.

Das anorganische Säurechlorid 3) wird im Überschuß gegenüber dem Sulfonierungsmittel eingesetzt. Im allgemeinen wird die 1,5- bis 10-fache molare Menge, bezogen auf eingesetztes Sulfonierungsmittel, angewandt. Dementsprechend kommen pro 250 g an Ausgangspolyisocyanat 1) 0,3 bis 22 Mol anorganisches Säurechlorid zum Einsatz. Falls pro 250 g Ausgangspolyisocyanat 1) ca. 1 Mol Schwefeltrioxid eingesetzt wird, werden vorzugsweise pro 250 g Polyisocyanat 1) 1,5 bis 8 Mole Säurechlorid verwendet.

Die Menge des als Katalysator verwendenten Dimethylformamids liegt gewöhnlich bei etwa 2 bis 40 g pro Mol Sulfonierungsmittel. Bevorzugt ist eine Menge zwischen 3 und 30 g. Da bekanntlich Isocyanate mit Dimethylformamid zu reagieren vermögen, wobei unerwünschte Nebenprodukte entstehen, wird man stets versuchen, unter den jeweils gegebenen Reaktionsbedingungen mit möglichst wenig Dimethylformamid auszukommen.

Der Gehalt der erfindungsgemäßen Verfahrensprodukte an Chlorsulfonylgruppen läßt sich leicht rechnerisch bestimmen, und zwar sowohl aus der Elementaranalyse (Chlor- und Schwefelwerte) als auch aus der Stöchiometrie. So hat beispielsweise das 4,4'-Diisocyanato-3-chlorsulfonyl-diphenylmethan einen Chlorsulfonylgruppengehalt von 28,5 Gew.-%, das 4,4'-Diisocyanato-3,3'-bischlorsulfonyl-diphenylmethan einen Chlorsulfonylgruppengehalt von 44,4 Gew.-%.

Das erfindungsgemäße Verfahren wird im allgemeinen im Temperaturbereich zwischen 0 und 160 °C, vorzugsweise zwischen 5 und 100 °C, durchgeführt.

Das erfindungsgemäße Verfahren eignet sich insbesondere zur Herstellung folgender Verbindungen :

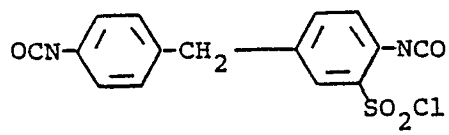

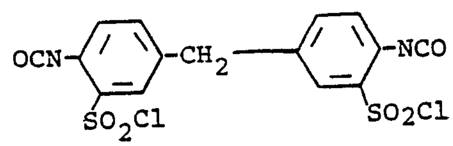

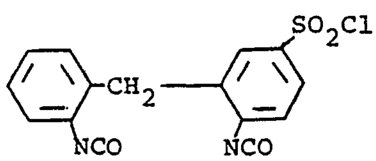

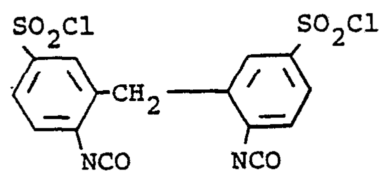

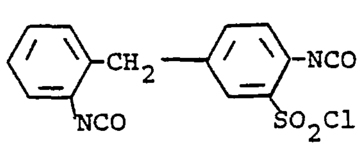

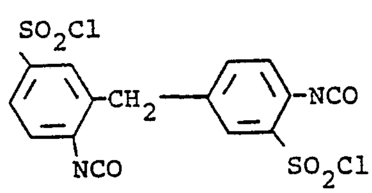

Das Verfahren ist weiterhin geeignet zur Herstellung beliebiger Mischungen dieser Isomeren sowie selbstverständlich bei unterschüssiger Stöchiometrie zur Herstellung einzelner Isomerer oder beliebiger Isomerengemische in überschüssigen Polyisocyanaten oder Polyisocyanatgemischen der Diphenylmethanreihe.

Für die Durchführung des erfindungsgemäßen Verfahrens kommen mehrere Möglichkeiten in Betracht:

Dem Di- bzw. Polyisocyanat wird zunächst das Sulfonierungsmittel und anschließend das Säurechlorid zugesetzt. Bei dieser Verfahrensvariante entstehen als Zwischenstufe die Uretdione der entsprechenden Isocyanatoarylsulfonsäuren die meist feste unlösliche Verbindungen sind.

Um die Rührbarkeit zu gewährleisten, muß entweder in Gegenwart eines der genannten inerten Lösungsmittel oder aber in Gegenwart eines Di- bzw. Polyisocyanatüberschusses sulfoniert werden. Falls pro 250 g Polyisocyanat 1) 0,7 bis 2,2 Mol Sulfonierungsmittel eingesetzt werden, ist die Mitverwendung eines Lösungsmittels unumgänglich. Die Sulfonierung wird im allgemeinen bei einer Temperatur zwischen 0 und 80 °C, vorzugsweise zwischen 5 und 40 °C, durchgeführt.

Bei der Verwendung von Chlorsulfonsäure als Sulfonierungsmittel hat es sich als zweckmäßig erwiesen, bei 40 bis 80 °C solange Stickstoff durch das Reaktionsgut zu leiten, bis der gesamte Chlorwasserstoff entfernt ist.

Dies kann titrimetrisch verfolgt werden. Im Anschluß an die Sulfonierung kann das Lösungsmittel ganz oder auch teilweise entfernt werden, z. B. durch Absaugen, Abschleudern oder auch Destillation. Feste Isocyanatoarylsulfonsäuren gehen nach Zugabe des Säurechlorids in Gegenwart eines der oben aufgeführten Katalysatoren meist rasch in Lösung. Bei Verwendung von Phosgen als Säurechlorid wird vorzugsweise das Lösungsmittel im Reaktionsansatz belassen.

Bei der Herstellung von Bischlorsulfonylderivaten (in einem Molverhätnis von Diisocyanat zu Sulfonierungsmittel von etwa 1 : 2) kann selbstverständlich auch das Diisocyanat zu einem Gemisch aus Lösungsmittel und Sulfonierungsmittel zugesetzt werden ; ebenso ist es möglich, eine bereits gebildete Diisocyanatoarylmonosulfonsäure in einem Überschuß an Sulfonierungsmittel weiter zu sulfonieren, das feste Reaktionsprodukt, beispielsweise mittels eines inerten Lösungsmittels, von überschüssigem Sulfonierungsmittel zu trennen und dann mit dem anorganischen Säurechlorid zu vermischen.

Eine andere Variante des erfindungsgemäßen Verfahrens besteht darin, das Di- bzw. Polyisocyanat 1) zunächst mit dem anorganischen Säurechlorid zu vermischen und dann das Sulfonierungsmittel zuzugeben. In diesem Fall dient das Säurechlorid gleichzeitig als Lösungsmittel, so daß auf gesonderte Zugabe eines Lösungsmittels verzichtet werden kann. Ein weiterer Vorteil dieser Verfahrensvariante besteht darin, daß die intermediär gebildete Diisocyanatosulfonsäure sofort nach der Entstehung mit dem Säurechlorid weiterreagiert und daß während der Reaktion nur wenig oder gar kein Niederschlag entsteht.

Selbstverständlich ist es auch möglich, das Sulfonierungsmittel und das anorganische Säurechlorid gleichzeitig auf das Di- bzw. Polyisocyanat 1) einwirken zu lassen, z. B. kann eine Lösung von Chlorsulfonsäure in Thionylchlorid eingesetzt werden. Besonders bevorzugt ist es, ein Diisocyanat 1) mit Phosgen zu behandeln und während der Phosgenierung zu sulfonieren.

Wie bereits dargelegt, kommt beim erfindungsgemäßen Verfahren das Sulfonierungsmittel 2) im allgemeinen in solchen Mengen zum Einsatz, daß pro 250 g Polyisocyanat 1) 0,2 bis 2,2 Mol Sulfonierungsmittel zur Verfügung stehen. Die Verwendung eines höheren Überschusses an Sulfonierungsmittel ist dann möglich, wenn die Sulfonierungsreaktion in einem getrennten Reaktionsschritt durchgeführt und das überschüssige Sulfonierungsmittel nach beendeter Sulfonierungsreaktion abgetrennt wird. Da das Sulfonierungsprodukt im allgemeinen eine aus dem flüssigen Reaktionsmedium ausfallende Festsubstanz darstellt, kann die Entfernung des überschüssigen Sulfonierungsmittels beispielsweise durch Auswaschen mit einem inerten Lösungmittel oder aber auch destillativ erfolgen. Vor Zugabe des Säurechlorids bei zweistufiger Durchführung des erfindungsgemäßen Verfahrens bzw. bei gleichzeitiger Sulfonierung und Einwirkung des Säurechlorids muß darauf geachtet werden, daß pro 250 g Polyisocyanat 1) niemals mehr als 2 Mol Sulfonierungsmittel eingesetzt werden.

Die Reaktion mit dem Säurechlorid, d. h. bei zweistufiger Reaktionsführung die Einwirkung des Säurechlorids auf die vorgebildete Sulfonsäure bzw. bei einstufiger Reaktionsführung die Einwirkung des Säurechlorids und des Sulfonierungsmittels auf das Di- bzw. Polyisocyanat wird im allgemeinen bei Temperaturen zwischen 0 und 160 °C, bevorzugt zwischen 5 und 100 °C, durchgeführt. In einer besonders bevorzugten Ausführungsform werden Sulfonierungsmittel und Säurechlorid bei etwa 20 bis 30 °C zugegeben und die Temperatur dann allmählich auf etwa 80 °C gesteigert. Die Reaktion wird solange fortgesetzt, bis aus dem Reaktionsgemisch kein Chlorwasserstoff mehr entweicht. Die Entfernung des Chlorwasserstoffs kann durch Einleiten von Kohlendioxid oder Stickstoff beschleunigt werden.

Nach erfolgter Reaktion werden evtl. verwendete Lösungsmittel sowie überschüssiges Säurechlorid durch Destillation entfernt. Der flüssige Rückstand enthält das Chlorsulfonylgruppen-haltige Polyisocyanat oder Polyisocyanatgemisch und ist für die meisten Verwendungszwecke bereits ausreichend rein. Sofern definierte Verbindungen vorliegen, kristallisieren diese in der Regel aus.

Neben Umkristallisation oder fraktioniertem Lösen oder fraktioniertem Fällen eignet sich meist zu weiteren Reinigung der Produkte — falls dies erwünscht ist — das Digerieren mit Toluol. Man trennt von unlöslichen Bestandteilen (häufig Spuren von Uretdiosulfonsäure) durch Filtration, destilliert das Toluol

im Vakuum ab und trocknet das Produkt im Hochvakuum. Es ist aber ein besonderer Vorteil des erfindungsgemäßen Verfahrens, daß häufig auf einem gesonderten Reinigungsschritt verzichtet werden kann.

Die Durchführbarkeit des erfindungsgemäßen Verfahrens bei relativ niedrigen Temperaturen in guter Ausbeute ist überraschend, da die Sulfonierung von Isocyanaten im allgemeinen zu recht thermostabilen Dimeren führt und unter Annahme dieser Dimeren als Zwischenstufe sowohl der Uretdionring als auch intermediär gebildetes Carbamidsäurechlorid wieder gespalten werden muß. Außer Chlorwasserstoff werden nur wenig Nebenprodukte gebildet. Ein besonderer Vorteil des erfindungsgemäßen Verfahrens besteht darin, daß ausgehend von großtechnisch hergestellten Polyisocyanaten bzw. Polyisocyanatgemischen der Diphenylmethanreihe auf einfache Weise die entsprechenden Chlorsulfonylgruppen-haltigen Derivate zugänglich geworden sind.

Diese Materialien stellen wertvolle Ausgangsmaterialien zur Herstellung von Polyisocyanat-Polyadditionsprodukten dar.

Insbesondere weisen die mit ihnen hergestellten Polyuretane im Vergleich zu entsprechenden Polyurethanen aus einfachen unmodifizierten Polyisocyanaten ein verbessertes Brandverhalten auf. Die erfindungsgemäßen Produkte sind darüber hinaus wertvolle Ausgangsmaterialien zur Herstellung anderer modifizierter Polyisocyanate, z. B. Herstellung der entsprechenden Isocyanatoarylsulfonsäureester.

## Beispiel 1

In eine Lösung von 125 g (0,5 m) 4,4-Diisocyanatodiphenylmethan in 800 ml getrocknetem 1,2-Dichlorethan werden bei 5 bis 10 °C 40 g (0,5 m) gasförmiges, mit Trägergas Stickstoff verdünntes Schwefeltrioxid aufgeleitet. Man läßt auf Raumtemperatur kommen und destilliert das Dichlorethan ab. Der zurückbleibende Kristallbrei wird in 400 ml Thionylchlorid (ca. 5,5 Mol) aufgenommen und bei Raumtemperatur langsam mit 6,5 g Dimethylformamid versetzt. Man heizt nun auf 80 °C und hält has Reaktionsgemisch solange bei dieser Temperatur, bis die Chlorwasserstoffabspaltung beendet ist.

Die Reaktionslösung ist nun fast klar. Nach Abfiltrieren von ca. 1,5 g Rückstand wird das Thionylchlorid im Vakuum abdestilliert. Man erhält 152 g Rohprodukt, das nach scharfem Trocknen einen Schwefelgehalt von 8,4 % (berechnet : 9,19 %) hat.

Zur weiteren Reinigung wird die Rohware bei 60 bis 70 °C mit 100 ml abs. Toluol behandelt. Man läßt über Nacht stehen, filtriert vom Unlöslichen ab und erhält nach Abdestillieren des Toluols 132 g (76 % der Theorie) 4,4'-Diisocyanato-3-chlorsulfonyldiphenylmethan vom Fp. 98 bis 103 °C.

Der Gehalt an Sulfochloridgruppen beträgt 28,5 Gew.-%.

## Beispiel 1a

Zu einer Mischung aus 50 ml Eis und 50 ml 51 %iger Dimethylaminlösung gibt man 4 g aus Beispiel 1 erhaltenes 4,4'-Diisocyanato-3-chlorsulfonyldiphenylmethan in 8 ml Acetonitril gelöst. Man verdünnt nach ca. 15 Minuten mit Wasser, saugt das Produkt ab und kristallisiert aus wäßrigem Ethanol um.

Man erhält ein weißes, wohlkristallines Derivat vom Schmelzpunkt 162 bis 163 °C, dem laut IR- und KR-Spektrum sowie laut Felddesorbtionsspektrum die folgende Konstitution zukommt :

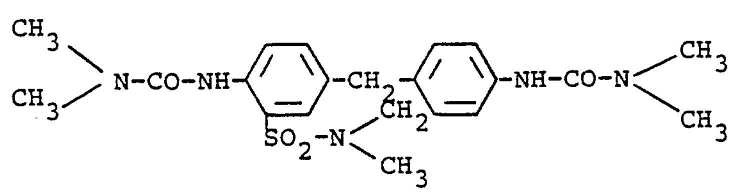

Demnach ist das Bisharnstoff-Monosulfonamid-Derivat des erfindungsgemäßen 4,4-Diisocyanato-3-chlorsulfonyldiphenylmethans entstanden.

Elementaranalyse : $C_{21}H_{29}N_5O_4S$ (441)

ber. : C 56,42 %, H 6,54 %, B 15,67 %, S 7,17 %

gef. : C 56,2 %, H 6,4 %, N 15,75 %, S 7,3 %.

## Beispiel 2

Man verfährt wie in Beispiel 1, leitet aber nunmehr 82 g (1,03 Mol) Schwefeltrioxid auf. Nach Abdestillieren des Dichlorethans erhält man einen weißen Festkörper, der mit 400 ml (ca. 6 Mol) Thionylchlorid versetzt wird. Die Chlorwasserstoffabspaltung wird bei Rückflußtemperatur durch portionsweisen Zusatz von insgesamt 6,6 g Dimethylformamid erreicht. Man destilliert den Thionylchloridüberschuß ab und behandelt den Rückstand zweimal bei ca. 80 °C mit je 650 ml Toluol. Nach Abdestillieren des Toluols erhält man 169 g Rohprodukt (75 % der Theorie).

I. Das Massenspektrum einer Probe beweist das Vorliegen von erfindungsgemäßem 4,4'-Diisocyanato-3,3'-bischlorsulfonyl-diphenylmethan als Hauptkomponente neben Spuren 4,4'-Diisocyanato-3-chlorsulfonyldiphenylmethan.

II. Zur weiteren Reinigung kan die fraktionierte Kristallisation aus absolutiertem Toluol herangezogen werden. Die Monochlorsulfonylverbindung ist in Toluol löslicher als die Bis-chlorsulfonyl-Verbindung. Man erhält so sauberes 4,4'-Diisocyanato-3,3'-bischlorsulfonyl-diphenylmethan als weiße Kristalle vom Schmelzpunkt 160 bis 162 °C.

Der Gehalt an Sulfochloridgruppen beträgt 44,4 Gew.-%.

III.
Elementaranalyse : $C_{15}H_8N_2O_6S_2Cl_2$ (448)
ber. : C 40,19 %, H 2,02 %, N 6,25 %, S 14,30 %
gef. : C 40,4 %, H 1,8 %, N 6,35 %, S 14,5 %.

Beispiel 2a

In eine Mischung aus 50 ml gemahlenem Eis und 50 ml 51 %iger Dimethylaminlösung gibt man 5 g aus Beispiel 2 erhaltenes, rohes 4,4'-Diisocyanato-3,3-bichlorsulfonyl-diphenylmethan in wenig warmem Acetonitril gelöst. Nach ca. 15 Minuten wird mit Wasser verdünnt, abgesaugt und aus wäßrigem Ethanol umkristallisiert. Man erhält weiß Kristalle vom Schmelzpunkt 163 bis 164 °C. Laut IR-, KR- und Felddesorbitions-Spektren handelt es sich um das Bisharnstoffbissulfonamid-Derivat des erfindungsgemäßen 4,4'-Diisocyanato-3,3'-bischlorsulfonyl-diphenylmethans folgender Struktur :

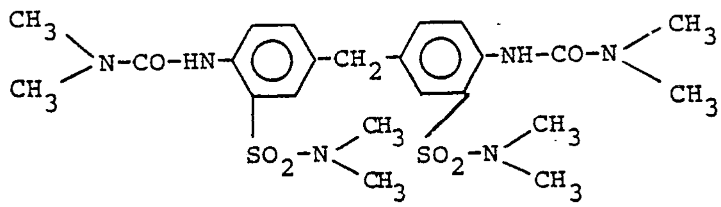

Elementaranalyse : $C_{23}H_{37}N_6O_6S_2$ (554)
ber. : C 49,82 %, H 6,18 %, N 15,16 %
gef. : C 49,70 %, H 6,20 %, N 15,15 %.

Beispiel 3

Vom rohen Phosgenierungsprodukt eines Anilin/Formaldehyd-Kondensates wird soviel Diisocyanatodiphenylmethan abdestilliert, bis die Viskosität bei 25 °C 200 ± 20 cp beträgt. (2-Kernanteil : 44,3 Gew.-%, 3-Kernanteil : 23,5 Gew.-%, Mehrkernanteil : 32,2 Gew.-%).

500 g dieses Polyisocyanates werden bei 5-10 °C mit 8,8 g (0,11 Mol) Schwefeltrioxid sulfoniert, wobei ein Sulfonierungsprodukt mit einem Schwefelgehalt von 0,7 % erhalten wurde. Das Produkt hat eine Viskosität (25 °C) von 1 050 cps und einen NCO-Wert von 29,5 Gew.-% NCO. 460 g (0,1 Val, $SO_3H$-Gruppen) dieses sulfonierten Polyisocyanates werden mit 119 g Thionylchlorid versetzt und bei 80 °C 2,5 Stunden gehalten, wobei nach und nach 1,4 g Dimethylformamid in 10 ml Toluol tropfenweise zugesetzt werden. Man destilliert das gesamte Thionylchlorid im guten Wasserstrahlvakuum ab und erhält das tiefbraune aber klare Rohprodukt.

Daten : Viskosität (25 °C) : 2 800 cps

| | |
|---|---|
| NCO | 30,9 % (unkorr.) |
| % Cl | 0,68 |
| % S | 0,76 |

Der nach der Elementaranalyse berechnete Gehalt an Chlorsulfonylgruppen beträgt 2,3 Gew.-% (Theorie : 2,19 %).

Beispiel 4

Man arbeitet in völliger Analogie zu Beispiel 1, jedoch unter Verwendung von 52 g $SO_3$ und erhält nach Abdestillieren des Thionylchlorids, Aufnehmen in 800 ml absolutem Toluol (80°), Filtration und Abdestillieren des Toluols 139 g Rohprodukt.

Aus dem Massenspektrum ist ersichtlich, daß neben Spuren 4,4'-Diisocyanatodiphenylmethans in etwa gleichen Mengen 4,4'-Diisocyanato-3-chlorsulfonyl- und 4,4'-Diisocyanato-3,3'-bischlorsulfonyl-Diphenylmethan vorliegen. Im IR-Spektrum sieht man die NCO-Gruppen bei 2280 $cm^{-1}$ und die —$SO_2Cl$-Gruppen bei 1 370 und 1 170 $cm^{-1}$.

Der Gehalt an Chlorsulfonylgruppen beträgt 36,8 Gew.-% (aus Elementaranalyse).

Beispiel 5

62,5 g (0,25 m) 2,2'-Diisocyanato-diphenylmethan werden bei Raumtemperatur in 300 ml trockenem 1,2-Dichlorethan gelöst und dann bei 5 bis 10 °C mit 64,1 g (0,55 m) Chlorsulfonsäure in 100 ml Dichlorethan sulfoniert.

Dabei färbt sich die gelbe Lösung zunächst rotbraun und scheidet nach ca. der Hälfte der verwendeten Chlorsulfonsäure ein gelbbraunes Öl aus. Ma erwärmt schließlich auf Rückflußtemperatur (ca. 80 °C) und nach 2 Stunden wird dann für weitere 2 Stunden mit Stickstoff der restliche Chlorwasserstoff ausgetrieben. Anschließend wird das Lösungsmittel im Vakuum abgezogen. Man erhält 102 g Uretdiondisulfonsäure des 2,2'-Diisocyanatodiphenylmethans.

Schwefelgehalt :
ber. : 15,6 % S
gef. : 15,5 % S

Die Disulfonsäure wird ohne weitere Reinigung in 400 ml (5,5 Mol) Thionylchlorid aufgenommen und bei Raumtempe ratur mit einer Mischung aus 2,5 g DMF und 5 g Pyridin versetzt. Man erwärmt langsam auf ca. 75 °C, wobei die braungelbe Suspension langsam in eine tiefbraune, fast völlig klare Lösung übergeht. Schon bei ca. 40 °C beginnt eine zügige Chlorwasserstoffabspaltung, die nach ca. 2,5 Stunden beendet ist. Nach Filtration von Spuren ungelöstem Material wird das überschüssige Thionylchlorid im Wasserstrahlvakuum abdestilliert, das Rohprodukt in ca. 400 ml absolutem Toluol bei 75 °C aufgenommen und die filtrierte Toluollösung zur Trockene eingedampft.

Man erhält 87 g 5,5'-Bis-chlorsulfonyl-2,2'-diisocyanatodiphenylmethan, welches noch ca. 5 % an 5-Monochlor-sulfonyl-2,2'-diisocyanato-diphenylmethan enthält.

Roh-Schmp. : 102-118 °C

Elementaranalyse für $C_{15}H_8N_2O_6S_2Cl_2$ :

| | % Cl | % S | % N |
|---|---|---|---|
| gef. | 15,53 | 14,05 | 6,36 |
| ber. | 15,82 | 14,30 | 6,25 |

Laut KR- und IR-Spektrum sowie laut Felddesorbtionsspektrum kommt dem Produkt die folgende Struktur zu :

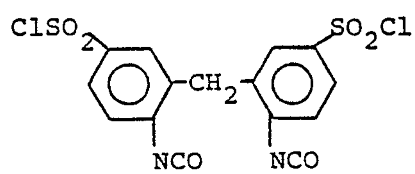

Der Gehalt an Chlorsulfonylgruppen beträgt 44,4 Gew.-%.

Ein gemäß Beispiel 1a hergestelltes Derivat (Bisharnstoff-bissulfonamid) hat aus wäßrigem Ethanol umkristallisiert einen Schmelzpunkt von 118-121 °C.

Es hat folgende analytisch gesicherte Konstitution :

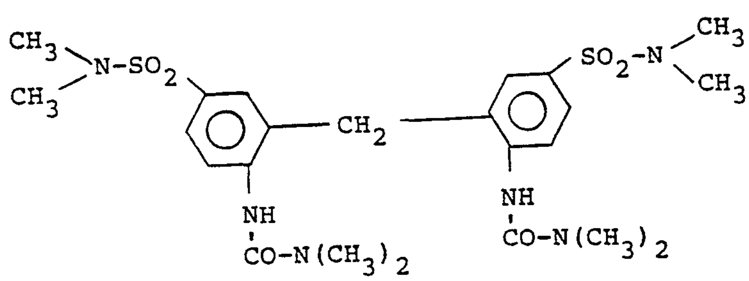

**Patentansprüche**

1. Chlorsulfonylgruppen enthaltende Diisocyanate gemäß der Formel

$$(OCN)_2R(SO_2Cl)_n$$

in welcher

R für einen Kohlenwasserstoffrest steht, wie er durch Entfernung von 2 Isocyanatgruppen und n

Wasserstoffatomen aus einem Diisocyanato-diphenylmethan oder einem Diisocyanato-diphenylmethan-Isomerengemisch erhalten wird und

n für 1 oder 2 steht.

2. Diisocyanat gemäß Anspruch 1 der Formel

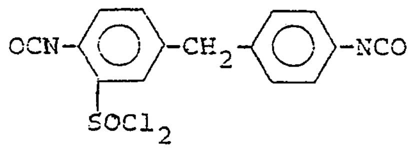

3. Diisocyanat gemäß Anspruch 1 der Formel

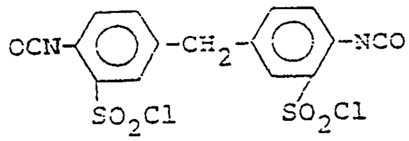

4. Verfahren zur Herstellung von substitutierten Polyisocyanaten oder Polyisocyanatgemischen der Diphenylmethanreihe, die einen Gehalt von 2 bis 50 Gew.-% an Chlorsulfonylgruppen aufweisen, dadurch gekennzeichnet, daß man mindestens 2 Isocyanatgruppen enthaltende Polyisocyanate oder Polyisocyanatgemische der Diphenylmethanreihe in beliebiger Reihenfolge nacheinander oder gleichzeitig bei 0-160 °C mit

a) 0,2 bis 2,2 Mol, pro 250 g an eingesetztem Polyisocyanat, Schwefeltrioxid oder Chlorsulfonsäure und

b) 0,3 bis 22 Mol, pro 250 g an eingesetztem Polyisocyanat, eines anorganischen Säurechlorids behandelt und Chlorwasserstof aus dem Reaktionsgemisch entfernt.

5. Verwendung der gemäß Anspruch 4 erhaltenen substituierten Polyisocyanate oder Polyisocyanatgemische als Aufbaukomponente bei der Herstellung von Polyisocyanat-Polyadditionsverbindungen.

**Claims**

1. Diisocyanates containing chlorosulphonyl groups and corresponding to the formula

$$(OCN)_2R(SO_2Cl)_n$$

in which

R represents a hydrocarbon radical of the type obtained by the removal of 2 isocyanate groups and n hydrogen atoms from a diisocyanato-diphenylmethane or a mixture of diisocyanato-diphenylmethane isomers and

n represents 1 or 2.

Diisocyanate according to Claim 1 of the formula

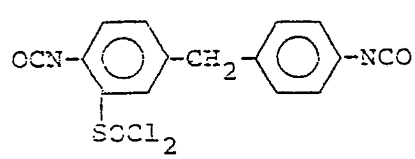

3. Diisocyanate according to Claim 1 of the formula

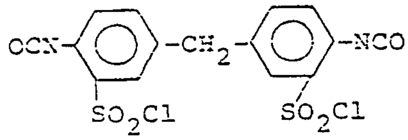

4. Process for the production of substituted polyisocyanates or polyisocyanate mixtures of the diphenylmethane series which have a content of 2 to 50 % by weight of chlorosulphonyl groups, characterised in that polyisocyanates or polyisocyanate mixtures of the diphenylmethane series, which contain at least 2 isocyanate groups, are treated with

a) 0.2 to 2.2 mol, per 250 g of polyisocyanate used, of sulphur trioxide or chlorosulphonic acid and

b) 0.3 to 22 mol, per 250 g of polyisocyanate used, of an inorganic acid chloride, in any desired order, and successively or simultaneously, at 0-160 °C, and hydrogen chloride is removed from the reaction mixture.

5. Use of substituted polyisocyanates or polyisocyanate mixtures obtained according to Claim 4 as a starting component in the production of polyisocyanate polyaddition compounds.

**Revendications**

1. Diisocyanates contenant des groupes chlorosulfonyle et répondant à la formule

$$(OCN)_2R(SO_2Cl)_n$$

dans laquelle

R représente un reste hydrocarboné tel qu'obtenu par élimination de deux groupes isocyanate et de n atomes d'hydrogène à partir d'un diisocyanatodiphénylméthane ou d'un mélange d'isomères du diisocyanatodiphénylméthane, et

n est égal à 1 ou 2.

2. Diisocyanate selon la revendication 1, de formule

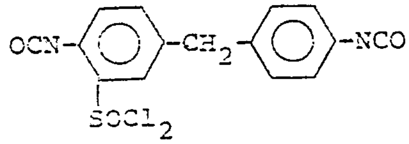

3. Diisocyanate selon la revendication 1, de formule

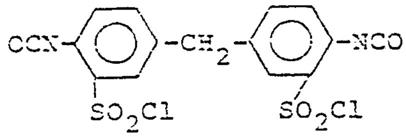

4. Procédé de préparation de polyisocyanates ou mélanges de polyisocyanates substitués de la série du diphénylméthane contenant de 2 à 50 % en poids de groupes chlorosulfonyle, caractérisé en ce que l'on traite des polyisocyanates ou mélanges de polyisocyanates de la série du diphénylméthane contenant au moins deux groupes isocyanate, successivement dans un ordre quelconque ou simultanément à une température de 0 à 160 °C par

a) 0,2 à 2,2 moles, pour 250 g du polyisocyanate mis en œuvre, d'anhydride sulfurique ou d'acide chlorosulfonique et

b) 0,3 à 22 moles, pour 250 g du polyisocyanate mis en œuvre, d'un chlorure d'acide minéral, et on élimine le chlorure d'hydrogène du mélange de réaction.

5. Utilisation des polyisocyanates ou mélanges de polyisocyanates substitués obtenus selon la revendication 4 en tant que composants de synthèse à la préparation de produits de polyaddition de polyisocyanates.